# FASCICULE DE BREVET EUROPEEN

(11) **EP 3 053 236 B1**
(45) Date de publication et mention de la délivrance du brevet: **01.04.2020**
(21) Numéro de dépôt: 13785513.6
(22) Date de dépôt: 01.10.2013
(51) Int. Cl.: H02H 7/122, H02M 1/32

(54) **PROCÉDÉ DE DÉCHARGE D'AU MOINS UNE UNITÉ DE STOCKAGE D'ÉNERGIE ÉLECTRIQUE, NOTAMMENT UN CONDENSATEUR, D'UN CIRCUIT ÉLECTRIQUE**
VERFAHREN ZUM ENTLADEN VON WENIGSTENS EINER ELEKTRISCHEN ENERGIESPEICHEREINHEIT, INSBESONDERE EINES KONDENSATORS, EINER ELEKTRISCHEN SCHALTUNG
METHOD OF DISCHARGING AT LEAST ONE ELECTRICAL ENERGY STORAGE UNIT, IN PARTICULAR A CAPACITOR, OF AN ELECTRICAL CIRCUIT

(43) Date de publication de la demande: 10.08.2016
(73) Titulaire: Valeo Systèmes De Contrôle Moteur, 95800 Cergy Saint Christophe (FR)
(72) Inventeur: ESNAULT, Eric, F-78280 Guyancourt (FR)
(74) Mandataire: Argyma
(86) Numéro de dépôt international: PCT/FR2013/052327
(87) Numéro de publication internationale: WO 2015/049427

(56) Documents cités:
- EP-A1- 2 058 935
- DE-A1-102011 089 316
- JP-A- 2003 348 856
- US-A1- 2009 195 199
- US-A1- 2011 080 149

## Description

La présente invention concerne la décharge d'au moins une unité de stockage d'énergie électrique, notamment un condensateur, d'un circuit électrique.

L'invention s'applique notamment à un circuit électrique comprenant un enroulement électrique de machine tournante. Ce circuit électrique peut servir à propulser un véhicule tel qu'une automobile à l'aide d'un moteur électrique.

Le circuit électrique comprend au moins une unité de stockage d'énergie électrique tel qu'un condensateur dont la décharge est souhaitable, par exemple pour répondre aux prescriptions de la norme EN 50178 de 1997 : « Equipement électronique utilisé dans des installations de puissance ». La tension aux bornes de cette unité de stockage d'énergie électrique peut être perceptible entre des bornes du circuit électrique accessibles depuis l'extérieur et l'existence de cette tension peut être dangereuse pour un opérateur tel qu'un garagiste, par exemple.

Dans l'application automobile mentionnée ci-dessus, il est connu de décharger un ou plusieurs condensateurs à l'aide de résistance(s) de décharge connectée(s) au circuit électrique et dédiée(s) à cette opération de décharge. Cette solution augmente le nombre de composants du circuit électrique et elle est ainsi coûteuse.

On connaît également, par exemple par le brevet US 7 652 858, un procédé de décharge de condensateur à travers l'enroulement électrique de stator d'une machine électrique tournante. Cette solution est à l'heure actuelle relativement complexe à mettre en œuvre car il faut éviter que le courant de décharge ne crée un couple moteur non souhaité, notamment lorsque le moteur comporte un rotor à aimants permanents.

Il est également connu des demandes US 2011/0080149 US 2009/0195199 et US 2010/0213904 de décharger un condensateur dans un unique bras court-circuité d'un onduleur triphasé ou dans un convertisseur de tension continu/continu. Ces solutions présentent comme inconvénients de dégrader les composants électroniques de l'onduleur ou du convertisseur de tension continu/continu et/ou de réduire leur durée de vie.

Il existe un besoin pour décharger de façon simple, peu coûteuse et efficace le ou les unités de stockage d'énergie électrique, par exemple les condensateurs, d'un circuit électrique comprenant un système de commutation et, le cas échéant, un enroulement électrique de stator de machine électrique tournante, ledit circuit étant notamment un circuit servant à la propulsion d'un véhicule hybride ou électrique.

L'invention a pour but de répondre à ce besoin et elle y parvient, selon l'un de ses aspects, à l'aide d'un procédé de décharge d'au moins une unité de stockage d'énergie électrique, notamment un condensateur ou une source d'énergie électrique autonome,, d'un circuit électrique, le circuit électrique comprenant en outre un système de commutation comprenant une pluralité de bras s'étendant chacun en parallèle entre un conducteur positif et un conducteur négatif d'un bus continu, chaque bras comprenant en série au moins deux cellules de commutation,
procédé dans lequel, pour décharger l'unité de stockage d'énergie électrique, notamment le condensateur, on ménage dans au moins deux des bras du système de commutation un court-circuit entre le conducteur positif et le conducteur négatif du bus continu pour permettre au courant de décharge de l'unité de stockage d'énergie électrique de circuler dudit conducteur positif audit conducteur négatif.

Selon le procédé ci-dessus, lors de la décharge de la ou des unités de stockage d'énergie électrique, au moins deux bras différents du système de commutation forment un court-circuit traversé par le courant de décharge. On évite ainsi de décharger l'unité de stockage d'énergie électrique dans l'enroulement électrique de stator et d'avoir à effectuer un contrôle relativement complexe pour ne pas générer un couple moteur non souhaité. La dissipation de puissance peut se faire dans les cellules de commutation des bras en court-circuit.

Le procédé ci-dessus peut également permettre d'éviter l'ajout de composants spécifiques pour décharger la ou les unités de stockage d'énergie électrique.

Contrairement aux solutions exposées dans les demandes US 2009/0195199 et US 2010/0213904 selon lesquelles le courant de décharge circule toujours dans les mêmes cellules de commutation en cas de court-circuit, le procédé ci-dessus permet d'éviter de ne solliciter qu'un seul bras. Les cellules de commutation du système de commutation n'ont ainsi pas à être surdimensionnées pour supporter un court-circuit, d'où une réduction en termes de coût. En outre, étant donné que plusieurs bras sont sollicités lors de la décharge de la ou des unités de stockage d'énergie électrique, le stress engendré par cette décharge est réparti entre ces bras. Ainsi, chaque bras est moins sollicité et ses cellules de commutation sont moins endommagées par la décharge que selon l'art antérieur.

Selon l'art antérieur un court-circuit n'est ménagé que dans un seul bras à la fois, c'est-à-dire que le courant de décharge emprunte successivement des bras différents lors de la décharge pour circuler du conducteur positif au conducteur négatif du bus continu. De cette façon, à un instant donné, le courant de décharge ne circule du conducteur positif au conducteur négatif du bus continu que par l'intermédiaire d'un seul bras. Un court-circuit «tournant» est ainsi ménagé dans le système de commutation entre le conducteur positif et le conducteur négatif du bus continu.

Selon ce mode de mise en œuvre le procédé peut comporter:
- une première étape selon laquelle on ménage un court-circuit dans un premier bras du système de commutation de sorte que le courant de décharge ne circule du conducteur positif au conducteur négatif du bus continu lors de cette première étape que par l'intermédiaire dudit premier bras, et
- une deuxième étape ultérieure selon laquelle on ménage un court-circuit dans un deuxième bras du système de commutation de sorte que le courant de décharge ne circule du conducteur positif au conducteur négatif lors de cette deuxième étape que par l'intermédiaire dudit deuxième bras.

Toujours selon ce mode de mise en œuvre la durée pendant laquelle le premier bras forme le court-circuit est inférieure à la durée pendant laquelle le deuxième bras forme le court-circuit. Chacune de ces durées est par exemple fraction de la valeur de la période de découpage du système de commutation. Un seul court-circuit peut être formé par période de découpage. Le premier bras peut former le court-circuit pendant une fraction d'une période de découpage donnée et le deuxième bras forme alors le court-circuit pendant une fraction d'une autre période de découpage donnée, par exemple la période de découpage suivante.

Lorsque la première étape ci-dessus correspond au début de la décharge de l'unité de stockage d'énergie électrique, le courant de décharge parcourant le premier bras est important. La faible durée pendant laquelle ce premier bras est en court-circuit permet de réduire le risque d'endommagement des cellules de commutation du premier bras par ce courant de décharge. Postérieurement à cette première étape, le courant de décharge est plus faible, de sorte qu'il peut circuler plus longtemps dans le deuxième bras lors de la deuxième étape.

Dans un exemple du premier mode de mise en œuvre, le système de commutation comprend trois bras, chaque bras formant successivement le court-circuit par l'intermédiaire duquel le courant de décharge circule du conducteur positif au conducteur négatif du bus continu.

Chacun des bras du système de commutation peut former à un instant donné le court-circuit par lequel le courant de décharge circule du conducteur positif au conducteur négatif du système de commutation. En variante, seuls certains bras du système de commutation forment séquentiellement le court-circuit par lequel le courant de décharge circule du conducteur positif au conducteur négatif du bus continu.

Selon le premier mode de mise en œuvre du procédé, le court-circuit peut se déplacer entre différents bras du système de commutation selon une séquence ordonnée et cette séquence ordonnée peut être répétée un nombre de fois prédéfini. Par exemple dans le cas d'un système de commutation à trois bras, la séquence ordonnée peut correspondre à la formation du court-circuit dans le premier bras seulement, puis dans le deuxième bras seulement, puis dans le troisième bras seulement et cette séquence ordonnée peut être répétée au moins deux fois, notamment cent fois pour décharger l'unité de stockage d'énergie électrique.

L'unité de stockage d'énergie électrique peut être un condensateur et, avant la décharge, la tension initiale accumulée entre les armatures du condensateur peut être d'environ 410 V. Le procédé peut être mis en œuvre pour décharger ce condensateur jusqu'à 80 % de sa charge initiale. La décharge du condensateur peut avoir une durée comprise entre une et dix secondes. En variante, l'unité de stockage d'énergie électrique est par exemple une source d'énergie électrique autonome formée notamment par une batterie ou tout assemblage de batteries et la décharge de cette source à l'aide du procédé ci-dessus peut avoir une durée plus importante.

Selon le premier mode de mise en œuvre de l'invention, le procédé comprend:
- une première étape selon laquelle on ménage un court-circuit dans un premier bras du système de commutation de sorte que le courant de décharge ne circule du conducteur positif au conducteur négatif du bus continu lors de cette première étape que par l'intermédiaire dudit premier bras, et
- une deuxième étape selon laquelle on ménage à la fois un court-circuit dans le premier bras et dans un deuxième bras de sorte que le courant de décharge circule du conducteur positif au conducteur négatif du bus continu lors de cette deuxième étape par l'intermédiaire du premier bras et du deuxième bras, lesdits bras formant alors chacun simultanément un court-circuit entre le conducteur positif et le conducteur négatif du bus continu.

La première étape peut être antérieure ou postérieure à la deuxième étape.Selon ce mode de mise en œuvre, un court-circuit est ménagé lors de la première étape dans le premier bras uniquement et, lors de la deuxième étape, la circulation du courant de décharge entre le conducteur positif et le conducteur négatif peut être permise par le premier bras et le deuxième bras qui forment chacun un court-circuit. Le court-circuit dans le deuxième bras, ménagé simultanément à celui dans le premier bras, permet de moins endommager dans la durée les cellules de commutation du premier bras.

Egalement selon ce deuxième mode de mise en œuvre, le système de commutation peut fonctionner selon une période de découpage et, lors de la première étape, un court-circuit est ménagé dans le premier bras pendant une durée fraction de la valeur de ladite période qui est inférieure à la durée fraction de la valeur de ladite période pendant laquelle un court-circuit est ménagé à la fois dans le premier bras et dans le deuxième bras. La première étape se produit par exemple pendant une fraction d'une période de découpage donnée tandis que la deuxième étape se produit pendant une fraction d'une autre période de découpage donnée, notamment la période de découpage précédente ou suivante.

Selon le premier mode de mise en œuvre de l'invention, la décharge de la ou les unités de stockage d'énergie électrique peut s'effectuer en ménageant successivement plusieurs courts-circuits dans le système de commutation entre le conducteur positif et le conducteur négatif et, au fur et à mesure de la décharge, la durée pendant laquelle chaque court-circuit est ménagé augmente. Cette augmentation peut se faire selon un facteur constant d'un court-circuit au suivant. La durée pendant laquelle chaque court-circuit est ménagé augmente par exemple de 1 % à chaque fois. En variante, l'augmentation de la durée du court-circuit peut être aléatoire. Comme déjà indiqué, plus la décharge de la ou des unités de stockage d'énergie électrique progresse et moins le courant de décharge traversant un bras formant le court-circuit est important, de sorte que la durée de ce court-circuit peut augmenter.

Le système de commutation peut former un convertisseur de tension continu/alternatif. Il s'agit alors d'un convertisseur de tension continu/alternatif polyphasé, notamment triphasé. Ce convertisseur peut fonctionner en onduleur ou en redresseur.

En variante, le système de commutation peut former au moins deux convertisseurs de tension continu/continu entrelacés. L'emploi de convertisseurs de tension continu/continu entrelacés peut permettre d'utiliser des convertisseurs dimensionnés pour véhiculer des puissances électriques moins importantes, d'où une réduction en termes de coût.

Le système de commutation peut alors fonctionner en survolteur ou en dévolteur.

Chaque cellule de commutation peut être commandable et, pour former un court-circuit dans un bras entre le conducteur positif et le conducteur négatif du bus continu, on peut commander les cellules de commutation de ce bras. On commande alors les cellules de commutation bras par bras pour faire circuler le courant de décharge du conducteur positif au conducteur négatif du bus continu.

En variante, chaque cellule de commutation peut être commandable et, préalablement à la décharge de l'unité de stockage d'énergie électrique, on commande toutes les cellules de commutation directement reliées au conducteur positif, respectivement négatif, du bus continu de manière à ce qu'elles aient toutes le même état de commutation, notamment qu'elles soient dans l'état fermé. On ménage ensuite chaque court-circuit en ne commandant que les cellules de commutation directement reliées au conducteur négatif, respectivement positif, du bus continu. Selon cette variante, on ne commande qu'une cellule de commutation par bras lorsque l'on souhaite déplacer le court-circuit d'un bras à l'autre du système de commutation. La commande peut alors être simplifiée.

Chaque cellule de commutation peut être identique ou non. Chaque cellule de commutation peut comprendre un interrupteur électronique commandable aux bornes duquel est montée une diode de roue libre en anti-parallèle.

En variante, seules les cellules de commutation directement reliées au même conducteur du bus continu sont commandables.

L'interrupteur électronique commandable est par exemple un transistor, notamment un transistor à effet de champ, un transistor bipolaire, ou un transistor IGBT.

Les interrupteurs commandables peuvent être dimensionnés pour chacun véhiculer un courant électrique de valeur maximale égale à 400 A, notamment à 5600 A.

Le circuit électrique peut comprendre un enroulement électrique de stator de machine électrique tournante apte à être relié au point milieu de chaque bras du système de commutation. Lorsque chaque bras ne comprend que deux cellules de commutation, le point milieu est disposé entre les deux cellules de commutation.

La machine électrique tournante est par exemple polyphasée, notamment triphasée. Il peut s'agir d'une machine synchrone, notamment à aimants permanents, d'une machine asynchrone ou d'une machine à reluctance variable. Il peut encore s'agir d'une machine à courant continu, d'une machine linéaire ou d'un électro-aimant. Cette machine électrique a par exemple une puissance nominale comprise entre 1 W et 200 kW.

L'enroulement électrique de stator peut présenter des bobines formant chacune une phase électrique et ces bobines peuvent être électriquement couplées ou non.

Des exemples de couplage électrique de bobines sont le couplage en étoile ou le couplage polygonal (appelé « couplage en triangle » dans le cas triphasé). Lorsque les bobines ne sont pas électriquement couplées entre elles, aucune bobine n'a une borne directement couplée à une borne d'une autre bobine.

Des interrupteurs peuvent être interposés entre chaque point milieu du système de commutation et l'enroulement électrique de stator et ces interrupteurs peuvent déconnecter le système de commutation de l'enroulement électrique de stator lors de la décharge de l'unité de stockage d'énergie électrique.

On s'assure ainsi que le courant de décharge ne circulera pas dans l'enroulement électrique de stator et qu'aucun couple moteur non désiré ne sera fourni par la machine électrique tournante. En outre, il n'est alors pas nécessaire, pour s'assurer que le procédé de décharge fonctionne de façon satisfaisante, de connecter le système de commutation à l'enroulement électrique de stator. On évite ainsi d'avoir à utiliser la machine électrique tournante pour tester le procédé de décharge, ce qui permet des opérations de test plus simples et dans un environnement moins encombré.

Lorsque l'unité de stockage d'énergie électrique que l'on décharge est un condensateur, ce dernier peut être monté en parallèle des bras du système de commutation.

En variante ou en combinaison de ce qui précède, le circuit électrique comprend en outre :
- une source d'énergie électrique autonome en parallèle de laquelle est monté un condensateur, et
- un convertisseur de tension continu/continu interposé entre ladite source d'énergie électrique autonome et le système de commutation,
le procédé peut permettre de décharger ledit condensateur.

Les cellules de commutation, c'est-à-dire leur état, peuvent être commandées en tension ou en courant.

La source d'énergie électrique autonome peut être une batterie, un super-condensateur ou tout assemblage de batteries ou de super-condensateurs. Il s'agit par exemple de plusieurs branches en parallèle de batteries en série. Cette source d'énergie électrique autonome peut avoir une tension nominale comprise entre 60 V et 410 V, notamment entre 200 V et 410 V.

Lorsque les bobines sont électriquement découplées, le circuit électrique peut comprendre un connecteur apte à être branché à un connecteur de type complémentaire d'un réseau électrique pour charger la source d'énergie électrique autonome, le connecteur comprenant au moins une pluralité de contacts ayant chacun une extrémité libre et une autre extrémité reliée à un point intermédiaire d'une bobine. Le réseau électrique alimente ainsi chaque bobine via un point intermédiaire de celle-ci, notamment un point milieu de celle-ci.

Un tel circuit électrique peut être à la fois utilisé pour :
- alimenter les bobines du stator depuis la source d'énergie électrique autonome et à travers le système de commutation utilisé en onduleur pour faire tourner la machine électrique, et
- charger la source d'énergie électrique autonome à travers les bobines du stator utilisées comme inductances et à travers le système de commutation utilisé comme redresseur.

En variante, le circuit électrique ci-dessus est dédié à la propulsion de la machine électrique tournante lorsqu'elle est alimentée par la source d'énergie électrique autonome et un autre circuit est embarqué sur le véhicule, cet autre circuit comprenant un connecteur permettant la charge depuis un réseau électrique extérieur monophasé, triphasé ou continu de la source d'énergie électrique autonome.

Le procédé de décharge peut être contrôlé en fonction de la valeur de la tension du bus continu, cette tension étant mesurée entre le conducteur positif et le conducteur négatif. Une unité de contrôle peut commander les cellules de commutation en fonction de la valeur de cette tension pour former un court-circuit dans le système de commutation entre le conducteur positif et le conducteur négatif. Cette commande peut être effectuée en boucle ouverte ou en boucle fermée.

Le circuit électrique peut comprendre un organe de mesure de la tension du bus continu et, en boucle ouverte, le rapport cyclique à appliquer aux interrupteurs électroniques des cellules de commutation peut être déterminé en fonction du pas d'augmentation de la tension du bus continu.

Le circuit électrique peut en variante comprendre un organe de mesure de la tension du bus continu et un organe de mesure du courant dans le conducteur positif du bus continu immédiatement en amont du système de commutation. La valeur de courant fournie par cet organe de mesure peut permettre une commande en boucle fermée grâce à un système de comparateur avec hystérésis et une surveillance de la tension du bus continu.

L'invention a encore pour objet, selon un autre de ses aspects, un procédé de décharge d'au moins une unité de stockage d'énergie électrique, notamment un condensateur ou une source d'énergie électrique autonome, d'un circuit électrique, le circuit électrique comprenant en outre un système de commutation comprenant une pluralité de bras s'étendant chacun en parallèle entre un conducteur positif et un conducteur négatif d'un bus continu, chaque bras comprenant en série au moins deux cellules de commutation,
le procédé comprenant :
- une première étape lors de laquelle on ménage un court-circuit dans un premier bras pour définir un chemin permettant au courant de décharge de circuler entre le conducteur positif et le conducteur négatif du bus continu, et
- une deuxième étape lors de laquelle on ménage un court-circuit dans un deuxième bras pour définir un chemin permettant au courant de décharge de circuler entre le conducteur positif et le conducteur négatif du bus continu.

Comme indiqué précédemment, un court-circuit « tournant » est obtenu. La puissance électrique liée à la décharge de l'unité de stockage d'énergie électrique, notamment le condensateur, est ainsi dissipée dans au moins deux bras du système de commutation.

Lors de la première étape, seul le premier bras peut former un court-circuit. En variante, le deuxième bras ou un autre bras forme également un court-circuit lors de cette première étape.

Lors de la deuxième étape, seul le deuxième bras peut former un court-circuit. En variante, le premier bras ou un autre bras forme également un court-circuit lors de cette deuxième étape.

Tout ou partie des caractéristiques mentionnées ci-dessus s'appliquent à cet autre aspect de l'invention.

En particulier, une variante de cet aspect de l'invention concerne un procédé de décharge d'au moins une unité de stockage d'énergie électrique, notamment un condensateur ou une source d'énergie électrique autonome, d'un circuit électrique, le circuit électrique comprenant en outre un système de commutation comprenant une pluralité de bras s'étendant chacun en parallèle entre un conducteur positif et un conducteur négatif d'un bus continu, chaque bras comprenant en série au moins deux cellules de commutation,
le procédé comprenant :
- une première étape lors de laquelle on ménage un court-circuit dans un premier bras et un deuxième bras pour définir un chemin permettant au courant de décharge de circuler entre le conducteur positif et le conducteur négatif du bus continu, et
- une deuxième étape lors de laquelle on ménage un court-circuit dans le deuxième bras et un autre bras pour définir un chemin permettant au courant de décharge de circuler entre le conducteur positif et le conducteur négatif du bus continu.

Un bras est commun entre les courts-circuits ménagés dans les première et deuxième étapes. Ainsi, on limite le nombre de bras mis en jeu dans les deux courts-circuits. Les interrupteurs et/ou les bras pouvant présenter entre eux une variabilité dans leurs paramètres de commande, ceci permet de simplifier le contrôle des interrupteurs dans le procédé de décharge de l'unité de stockage.

Le procédé peut comprendre une étape antérieure aux première et seconde étapes, selon laquelle on ménage un court-circuit dans le premier bras du système de commutation de sorte que le courant de décharge ne circule du conducteur positif au conducteur négatif du bus continu lors de cette première étape que par l'intermédiaire dudit premier bras.Le procédé peut comprendre une étape antérieure aux première et seconde étapes selon laquelle on ménage un court-circuit dans un troisième bras du système de commutation de sorte que le courant de décharge ne circule du conducteur positif au conducteur négatif du bus continu lors de cette première étape que par l'intermédiaire dudit troisième bras.

Au début de la décharge de l'unité de stockage, l'énergie à évacuer est importante. Or, le contrôle de plusieurs bras de façon concourante peut comprendre des incohérences telles qu'entre autres des retards d'ouverture/fermeture entre des interrupteurs des bras. Ces incohérences, étant donné l'énergie importante à évacuer, peuvent entraîner un surcroit d'usure des interrupteurs des bras. En outre, les interrupteurs et/ou les bras peuvent présenter entre eux une variabilité dans leurs paramètres de commande. En ménageant un court-circuit d'abord sur un premier bras, on diminue les risques d'usure des interrupteurs des bras et augmente la fiabilité du procédé de décharge.

En particulier, le court-circuit ménagé dans l'étape antérieure a une durée suffisamment faible pour éviter l'apparition d'un fort courant dans le bras utilisé dans cette étape antérieure. Plus particulièrement, la durée du court-circuit de l'étape antérieure est comprise entre une durée minimale d'application d'un signal de commande à un interrupteur du bras et une durée maximale d'ouverture d'un interrupteur du bras, ladite durée maximale correspondant à un courant maximal supporté par l'interrupteur. Par exemple, la durée minimale est de 400 ns, voire 500 ns, voire 600 ns. La durée maximale est de 700 ns, voire 800 ns, voire même 900 ns.

Par exemple, cette étape antérieure, les première et seconde étapes sont mises en œuvre l'une à la suite de l'autre après réception d'un signal commandant la décharge de l'unité de stockage.

L'invention concerne en outre un convertisseur de tension, notamment pour un compresseur de climatisation d'un véhicule, comprenant :
- un système de commutation comportant une pluralité de bras s'étendant chacun en parallèle entre un conducteur positif et un conducteur négatif d'un bus continu, chaque bras comprenant en série au moins deux cellules de commutation, et
- une unité de contrôle configurée pour mettre en œuvre un procédé selon invention.

Le convertisseur peut comprendre l'une quelconque des caractéristiques décrites précédemment et qui lui sont compatibles.

L'invention concerne aussi un compresseur de climatisation électrique pour véhicule comprenant un convertisseur de tension selon l'invention.

L'invention pourra être mieux comprise à la lecture de la description qui va suivre d'un exemple non limitatif de mise en œuvre de celle-ci et à l'examen du dessin annexé sur lequel :
- la figure 1 représente de façon schématique et partielle un circuit électrique dans lequel peut être mis en œuvre le procédé pour décharger un ou plusieurs condensateurs,
- la figure 2 représente de façon schématique un exemple de circuit électrique comprenant celui représenté sur la figure 1,
- la figue 3 représente de façon schématique une variante du circuit représenté sur la figure 1,
- la figure 4 est un chronogramme représentant la commande des bras du système de commutation du circuit des figures 1 à 3 lorsque le procédé de décharge selon un mode réalisation est mis en œuvre,
- les figures 5 et 6 représentent respectivement la tension et le courant aux bornes du condensateur lors de sa décharge, et
- la figure 7 est un chronogramme représentant la commande des bras du système de commutation du circuit des figures 1 à 3 lorsque le procédé de décharge selon un autre mode réalisation est mis en œuvre.

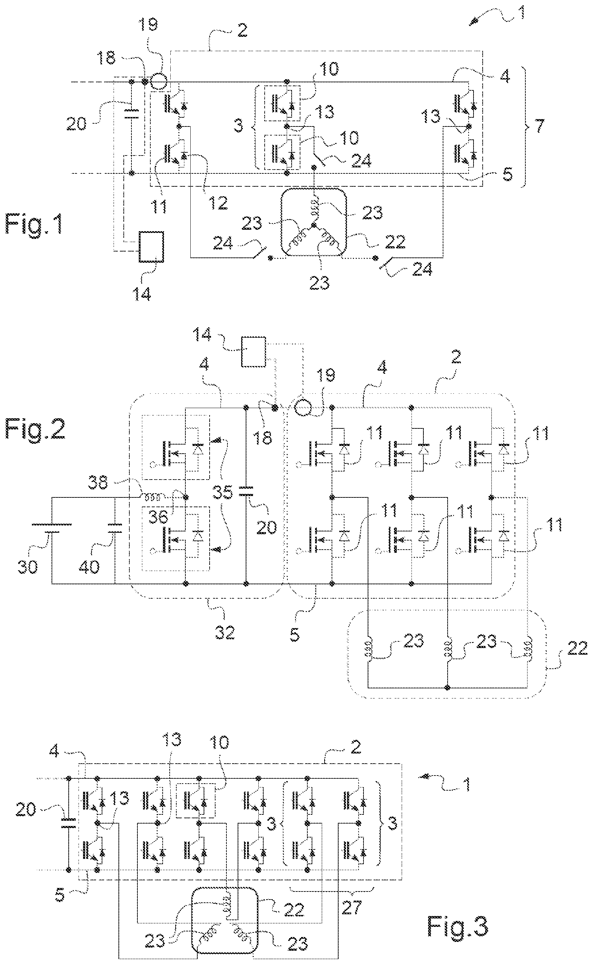

On a représenté sur la figure 1 de façon partielle un circuit électrique 1 dans lequel le procédé de décharge peut être mis en œuvre. Dans l'exemple décrit, le procédé permet la décharge d'un condensateur mais l'invention n'est pas limitée à un tel exemple de composant à décharger.

Ce circuit 1 comprend un système de commutation 2 comprenant une pluralité de bras 3 s'étendant chacun entre un conducteur positif 4 et un conducteur négatif 5 d'un bus continu 7.

Dans l'exemple considéré, le système de commutation 2 est un convertisseur continu/alternatif triphasé mais l'invention n'est pas limitée à cet exemple. Chaque bras 3 comprend dans cet exemple deux cellules de commutation 10 commandables.

La fréquence de découpage du système de commutation 2 est par exemple de 10 kHz. Chaque cellule de commutation 10 est par exemple formée par un interrupteur commandable 11 en anti-parallèle duquel est montée une diode de roue libre 12. L'interrupteur 11 peut être un transistor, notamment un transistor à effet de champ, bipolaire ou de type IGBT. Chaque bras 3 comprend un point milieu 13, disposé entre les deux cellules de commutation 10.

Dans l'exemple considéré, chaque cellule de commutation 10 est commandable et une unité de contrôle centralisée 14 peut être prévue. Cette unité de contrôle 14 comprend des moyens de traitement, numérique ou non, et peut piloter l'ensemble des interrupteurs électroniques 11.

Le pilotage d'un interrupteur électronique 11 peut être effectué en injectant un courant dans l'électrode de commande de cet interrupteur 11 ou en appliquant un potentiel électrique à cette électrode de commande.

L'unité de contrôle 14 comprend dans l'exemple considéré un ou plusieurs microcontrôleurs et/ou un ou plusieurs circuits logiques programmables (FPGA en anglais). Cette unité de contrôle 14 peut disposer d'un organe de mesure 18 de la tension du bus continu 7 et/ou d'un organe de mesure 19 du courant parcourant le bus continu 7.Comme représenté sur la figure 1, un condensateur 20 est monté en parallèle des bras 3. Ce condensateur a par exemple une capacité comprise entre 200 µF et 3500 µF.

Dans l'exemple de la figure 1, le circuit 1 comprend un enroulement électrique 22 de stator de machine électrique tournante. Cet enroulement électrique 22 est par exemple triphasé, comprenant trois bobines 23 formant chacune une phase électrique du stator. Chaque bobine 23 comprend une borne reliée à un point milieu 13 du système de commutation 2. Cette liaison peut s'effectuer, comme dans l'exemple de la figure 1 en franchissant un interrupteur 24 interposé entre chaque point milieu 13 et la bobine 23 correspondante.

La machine électrique tournante peut être une machine synchrone, notamment à aimants permanents, une machine asynchrone ou une machine à réluctance variable.

Dans l'exemple de la figure 1, les bobines 23 sont électriquement couplées en étoile. L'invention n'est cependant pas limitée à ce mode de couplage électrique ou à des bobines 23 électriquement couplées entre elles. Ainsi, la figure 3 représente une variante de la figure 1 selon laquelle les bobines 23 ne sont pas électriquement couplées entre elles.

Sur cette figure 3, on peut constater qu'aucune bobine 23 ne présente de borne directement reliée, c'est-à-dire reliée sans composant(s) intermédiaire(s), à une borne d'une autre bobine 23 de l'enroulement électrique de stator 22.

Dans cet exemple, le système de commutation 2 comprend deux fois plus de bras 3 que dans celui de la figure 1. Chaque point milieu 13 d'un bras 3 est dans l'exemple de la figure 3 relié à une borne respective d'une des bobines 23, chaque bobine 23 étant alors disposée entre deux points milieu 13 de deux bras distincts qui forment un pont en H 27.

Aucun interrupteur 24 n'est représenté sur la figure 3 entre le système de commutation 2 et l'enroulement électrique 22 de stator mais de tels interrupteurs peuvent être prévus pour déconnecter l'enroulement 22 du système de commutation 2.

On va maintenant décrire en référence à la figure 2 un complément du circuit de la figure 1 qui concerne aussi le circuit de la figure 3. Une source d'énergie électrique autonome 30 peut être disposée en amont du condensateur 20 pour alimenter l'enroulement électrique 22 de stator à travers le système de commutation 2. Cette source d'énergie électrique autonome 30 peut être une batterie ou une association en parallèle et/ou en série de batteries.

Le circuit 1 comprend encore dans l'exemple de la figure 2 un convertisseur de tension continu/continu 32. Ce convertisseur de tension 32 est configuré pour adapter la valeur de la tension délivrée par la source d'énergie électrique autonome 30 au bus continu 7, et réciproquement.

Le convertisseur 32 est dans l'exemple représenté un hacheur réversible en courant. De façon connue, ce hacheur 32 comprend deux cellules de commutation 35, identiques ou non aux cellules de commutation 10 du système de commutation 2, et séparées par un point médian 36. Les cellules de commutation 35 peuvent être pilotées par l'unité de commande 14. Chacune de ces cellules 35 est dans l'exemple considéré réversible, comprenant en antiparallèle un interrupteur commandable et une diode. Une inductance 38 est interposée entre ce point médian 36 et la source d'énergie électrique autonome 30.

Comme représenté sur la figure 2, un condensateur 40 peut être monté en parallèle de la source d'énergie électrique autonome 30.

Pour des raisons de sécurité, par exemple lors d'opérations de maintenance, en cas d'accident, ou lors de tests réalisés dans une usine , il peut être nécessaire de procéder à la décharge du condensateur 20 et/ou du condensateur 40.

Dans l'exemple décrit ci-après, on s'intéresse à la décharge du condensateur 20 lorsque la tension à ses bornes atteint la valeur de 410 V. Bien entendu, le procédé qui va être exposé ci-dessous peut également être mis en œuvre lorsque l'on souhaite décharger le condensateur 40 à la place, ou en complément, du condensateur 20, ou encore tout autre condensateur du circuit électrique non représenté sur la figure 2, ou encore toute autre unité de stockage d'énergie électrique du circuit électrique 1, par exemple la source d'énergie électrique autonome 30.

Lors de la décharge, l'enroulement électrique 22 de stator peut être déconnecté du reste du circuit électrique 1 grâce aux interrupteurs 24 qui passent en position ouverte.

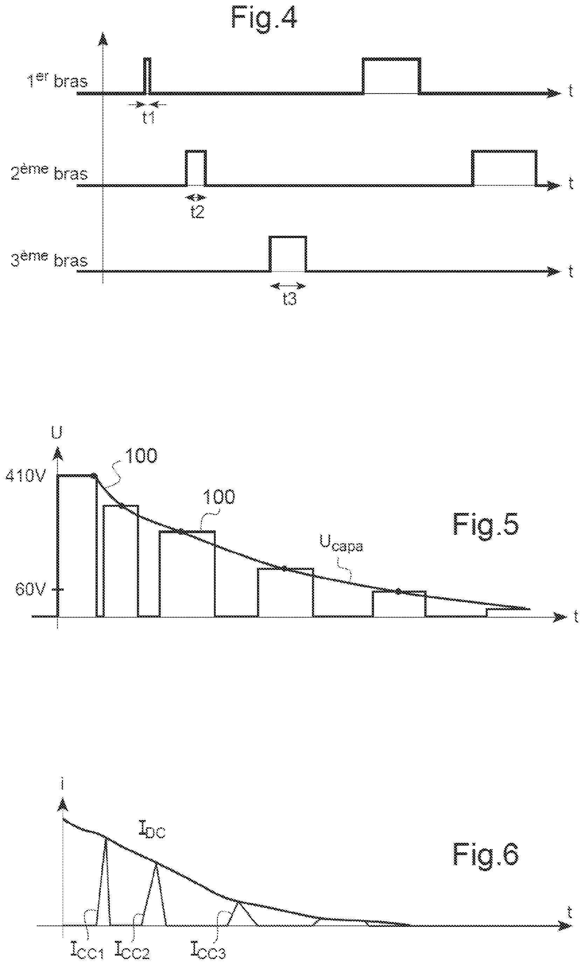

Pour décharger le condensateur 20, chaque bras 3 du système de commutation peut successivement former un court-circuit comme représenté sur la figure 4. Dans cet exemple, un court-circuit est d'abord ménagé dans le bras 3 le plus à gauche du système de commutation 2 de la figure 1, appelé « premier bras » par la suite. Pour ménager ce court-circuit, les deux interrupteurs électroniques 11 du premier bras sont commandés en fermeture pendant une durée t1 fraction de la valeur de la période de découpage. Lorsque le premier bras forme un court-circuit, ce bras définit un chemin par lequel le courant de décharge I_{DC} peut circuler du conducteur positif 4 au conducteur négatif 5 pendant la durée t1. Ce courant I_{DC} circulant également dans le bus continu 7 est alors égal au courant de court-circuit I_{CC1} parcourant le premier bras, comme représenté sur la figure 6.

Comme on peut également le voir sur la figure 5, le court-circuit permet de diminuer la valeur de la tension 100 aux bornes du condensateur 20. Sur cette figure 5, la courbe 110 correspond à la tension aux bornes de chaque bras 3.

Lors de l'itération suivante, un court-circuit est ensuite ménagé dans le bras du milieu du système de commutation 2 de la figure 1, encore appelé « deuxième bras» par la suite. Pour ménager ce court-circuit, les deux interrupteurs électroniques 11 du deuxième bras 3 sont commandés en fermeture pendant une durée t2, fraction de la valeur de la période de découpage, lors de la période de découpage suivante. Lorsque le deuxième bras forme le court-circuit, ce bras définit un chemin par lequel le courant de décharge I_{DC} peut circuler du conducteur positif 4 au conducteur négatif 5 pendant la durée t2. Ce courant I_{DC} circulant également dans le bus continu 7 est alors égal au courant de court-circuit I_{CC2} parcourant le deuxième bras, comme représenté sur la figure 6.

On peut remarquer sur les figures 5 et 6 que le courant de décharge I_{DC} a une valeur supérieure lorsqu'il circule dans le premier bras pendant la durée t1 à la valeur qu'il a lorsqu'il circule dans le deuxième bras pendant la durée t2. On peut également remarquer que la circulation du courant de décharge I_{DC} dans le deuxième bras permet de diminuer encore la valeur de la tension du bus continu 7. Comme on peut le voir sur la figure 4, la durée t2 est en outre supérieure à la durée t1.

Lorsque l'on souhaite poursuivre la décharge du condensateur 20, un court-circuit est ensuite ménagé dans le bras de droite du système de commutation de la figure 1, encore appelé « troisième bras » par la suite. Pour ménager ce court-circuit, les deux interrupteurs électroniques 11 du troisième bras 3 sont commandés en fermeture pendant une durée t3, fraction de la valeur de la période de découpage, lors de la période de découpage suivant celle pendant laquelle le deuxième bras forme le court-circuit. Lorsque le troisième bras forme le court-circuit, ce bras définit un chemin par lequel le courant de décharge I_{DC} peut circuler du conducteur positif 4 au conducteur négatif 5 pendant la durée t3. Ce courant I_{DC} qui circule également dans le bus continu 7 est alors égal au courant de court-circuit I_{CC3} parcourant le troisième bras, comme représenté sur la figure 6.

On peut remarquer sur les figures 5 et 6 que le courant de décharge I_{DC} a une valeur supérieure lorsqu'il circule dans le deuxième bras pendant la durée t2 à la valeur qu'il a lorsqu'il circule dans le troisième bras pendant la durée t3. On peut également remarquer que la circulation du courant de décharge I_{DC} dans le troisième bras permet de diminuer encore la valeur de la tension du bus continu 7. Comme on peut le voir sur la figure 4, la durée t3 est en outre supérieure à la durée t2, elle-même supérieure à la durée t1.

Selon que la valeur de la tension mesurée par l'organe de mesure 18 ou que la valeur de courant mesurée par l'organe de mesure 19 est inférieure à une valeur prédéfinie, on peut continuer ou non de décharger la capacité 20.

Les bras 3 du système de commutation 2 peuvent à nouveau être successivement commandés en court-circuit, dans le même ordre que celui qui vient d'être indiqué, avec à chaque fois, une durée de court-circuit croissante d'une itération à l'autre.

La décharge ci-dessus peut être effectuée en boucle ouverte, c'est-à-dire que l'unité de contrôle 14 pilote les interrupteurs électroniques commandables 11 en leur appliquant des valeurs de rapport cyclique déterminées en fonction du pas d'augmentation de la tension du bus continu 7 obtenue à l'aide de l'organe de mesure 18. Dans ce cas, l'organe de mesure 19 du courant peut ne pas être présent.

En variante, la décharge est effectuée en boucle fermée grâce aux organes de mesure 18 et 19. La valeur de courant fournie par l'organe de mesure 19 de courant peut être utilisée par un système de comparateur avec hystérésis et la valeur de la tension du bus continu peut être surveillée.

L'invention n'est pas limitée à l'exemple de décharge qui vient d'être décrit.

Dans un autre exemple non décrit, pour former successivement le court-circuit, on positionne d'abord tous les interrupteurs électroniques 11 reliés au conducteur positif 4 du bus continu 7 dans un même état, par exemple fermé. Pour former un court-circuit dans un bras, on commande l'interrupteur électronique de ce bras qui est relié au conducteur négatif 5 du bus continu en fermeture.

Dans d'autres exemples, la commande des interrupteurs électroniques 11 effectuée par l'unité de contrôle 14 peut être effectuée en boucle fermée (voir Figure 8).

Dans d'autres exemples encore, le système de commutation est autre, comprenant par exemple un nombre de bras différent ou étant un convertisseur DC/DC entrelacé.

L'expression «comportant un» doit être comprise comme étant synonyme de l'expression « comportant au moins un », sauf lorsque le contraire est spécifié.

Dans un exemple particulier, le système de commutation 2 du circuit 1 illustré en figures 1, 2 et 3 peut être un convertisseur de tension, par exemple un convertisseur continu/alternatif, pour commander un moteur électrique d'un compresseur de climatisation, notamment pour un véhicule.

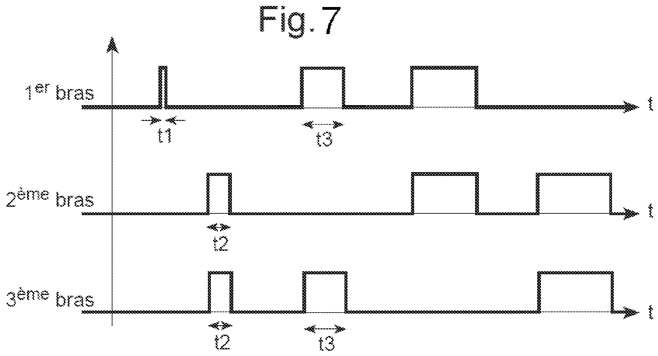

La figure 7 illustre un autre exemple de procédé pour décharger le condensateur 20 qui sera décrit en insistant sur les différences avec l'exemple de la figure 4.

Un court-circuit est d'abord ménagé dans le bras 3 le plus à gauche. Cependant lors de l'itération suivante, à la différence de l'exemple illustré en figure 4, un court-circuit est ménagé en même temps dans les deuxième et troisième bras du système de commutation 2 pendant la durée t2, fraction de la valeur de la période de découpage. Les deux bras définissent des chemins par lesquels le courant de décharge I_{DC} peut circuler du conducteur positif 4 au conducteur négatif 5 pendant la durée t2. Le courant I_{DC} circulant dans le bus continu 7 est alors égal à la somme des courants de court-circuit I_{CC2}, I_{CC3} parcourant les deuxième et troisième bras. En faisant circuler le courant de décharge I_{DC} dans deux bras on diminue la durée totale de décharge par rapport à l'exemple de la figure 4.

Lorsque l'on souhaite poursuivre la décharge du condensateur 20, un court-circuit est ensuite ménagé dans les troisième et premier bras pendant une durée t3, fraction de la période de découpage. Lors de l'itération suivante, un court-circuit peut être ménagé dans le premier bras et le second bras.

Selon que la valeur de la tension mesurée par l'organe de mesure 18 ou que la valeur de courant mesurée par l'organe de mesure 19 est inférieure à une valeur prédéfinie, on peut continuer ou non de décharger la capacité 20. Les bras 3 du système de commutation 2 peuvent à nouveau être successivement commandés en court-circuit deux par deux, dans le même ordre que celui qui vient d'être indiqué, avec à chaque fois, une durée de court-circuit croissante d'une itération à l'autre comme expliqué pour l'exemple illustré en figure 4.

Dans l'exemple illustré en figure 7, la durée t1 de fermeture des deux interrupteurs électroniques 11 du premier bras est égale à 700 ns. De 0 à 500 ns, un signal de fermeture est appliqué aux interrupteurs du bras. Au bout de 500 ns, on est sûr que les interrupteurs sont fermés. Le courant de décharge I_{DC} augmente progressivement dans le premier bras jusqu'à atteindre environ 2800 A au bout de 200 ns. Les interrupteurs sont alors ouverts pour éviter un courant d'intensité plus élevée qui leur serait destructeur.

Pour décharger le condensateur 20, chaque bras 3 du système de commutation peut successivement former un court-circuit comme représenté sur la figure 4. Dans cet exemple, un court-circuit est d'abord ménagé dans le bras 3 le plus à gauche du système de commutation 2 de la figure 1, appelé « premier bras » par la suite. Pour ménager ce court-circuit, les deux interrupteurs électroniques 11 du premier bras sont commandés en fermeture pendant une durée t1 fraction de la valeur de la période de découpage. Lorsque le premier bras forme un court-circuit, ce bras définit un chemin par lequel le courant de décharge I_{DC} peut circuler du conducteur positif 4 au conducteur négatif 5 pendant la durée t1. Ce courant I_{DC} circulant également dans le bus continu 7 est alors égal au courant de court-circuit I_{CC1} parcourant le premier bras, comme représenté sur la figure 6.

## Revendications

1. Procédé de décharge d'au moins une unité de stockage d'énergie électrique, notamment un condensateur ou une source d'énergie électrique autonome, d'un circuit électrique, le circuit électrique comprenant en outre un système de commutation comprenant une pluralité de bras s'étendant chacun en parallèle entre un conducteur positif et un conducteur négatif d'un bus continu, chaque bras comprenant en série au moins deux cellules de commutation,
le procédé comprenant :
- une première étape lors de laquelle on ménage un court-circuit dans un premier bras et un deuxième bras pour définir un chemin permettant au courant de décharge de circuler entre le conducteur positif et le conducteur négatif du bus continu, et **caractérisé en ce que** le procédé comprend
- une deuxième étape lors de laquelle on ménage un court-circuit dans le deuxième bras et un autre bras pour définir un chemin permettant au courant de décharge de circuler entre le conducteur positif et le conducteur négatif du bus continu.

2. Procédé selon la revendication 1, comprenant :
- une étape antérieure aux première et seconde étapes selon laquelle on ménage un court-circuit dans le premier bras du système de commutation (2) de sorte que le courant de décharge (I_{DC}) ne circule du conducteur positif (4) au conducteur négatif (5) du bus continu (7) lors de cette première étape que par l'intermédiaire dudit premier bras.

3. Procédé selon la revendication 1, comprenant :
- une étape antérieure aux première et seconde étapes selon laquelle on ménage un court-circuit dans un troisième bras du système de commutation (2) de sorte que le courant de décharge (I_{DC}) ne circule du conducteur positif (4) au conducteur négatif (5) du bus continu (7) lors de cette première étape que par l'intermédiaire dudit troisième bras.

4. Procédé selon l'une quelconque des revendications 1 à 3, dans lequel la décharge de l'unité de stockage d'énergie électrique s'effectue en ménageant successivement plusieurs courts-circuits dans le système de commutation (2) entre le conducteur positif (4) et le conducteur négatif (5) du bus continu (7) et dans lequel, au fur et à mesure de la décharge de l'unité de stockage d'énergie électrique, la durée pendant laquelle chaque court-circuit est ménagé augmente.

5. Procédé selon l'une quelconque des revendications précédentes, dans lequel le système de commutation (2) forme un convertisseur de tension continu/alternatif.

6. Procédé selon l'une quelconque des revendications 1 à 4, dans lequel le système de commutation (2) forme au moins deux convertisseurs de tension continu/continu entrelacés.

7. Procédé selon l'une quelconque des revendications précédentes, dans lequel chaque cellule de commutation (10) est commandable et dans lequel, pour former un court-circuit dans un bras (3) entre le conducteur positif (4) et le conducteur négatif (5) du bus continu (7), on commande les cellules de commutation (10) de ce bras (3).

8. Procédé selon l'une quelconque des revendications 1 à 6, dans lequel chaque cellule de commutation (10) est commandable et dans lequel, on commande préalablement à la décharge de l'unité de stockage d'énergie électrique toutes les cellules de commutation (10) directement reliées au conducteur positif (4), respectivement négatif (5), du bus continu (7) de manière à ce qu'elles aient toutes le même état de commutation et dans lequel, on ménage chaque court-circuit en ne commandant que les cellules de commutation (10) directement reliées au conducteur négatif (5), respectivement positif (4), du bus continu (7).

9. Procédé selon l'une quelconque des revendications précédentes, dans lequel le circuit électrique (1) comprend également un enroulement électrique (22) de stator de machine électrique tournante apte à être relié au point milieu (13) de chaque bras (3) du système de commutation (2).

10. Procédé selon la revendication 9, dans lequel un interrupteur (24) est interposé entre chaque point milieu (13) du système de commutation (2) et l'enroulement électrique (22) de stator et dans lequel ces interrupteurs (24) déconnectent le système de commutation (2) de l'enroulement électrique (22) de stator lors de la décharge de l'unité de stockage d'énergie électrique.

11. Procédé selon l'une quelconque des revendications précédentes, dans lequel un condensateur (20) est monté en parallèle des bras (3) du système de commutation (2) et dans lequel on décharge ledit condensateur (20).

12. Procédé selon l'une quelconque des revendications précédentes, dans lequel le circuit électrique (1) comprend en outre une source d'énergie électrique autonome (30) en parallèle de laquelle est monté un condensateur (40), et un convertisseur de tension continu/continu (32) interposé entre ladite source d'énergie électrique autonome (30) et le système de commutation (2), procédé dans lequel on décharge ledit condensateur (40).

13. Convertisseur de tension, notamment pour un compresseur de climatisation d'un véhicule, comprenant :
- un système de commutation (2) comportant une pluralité de bras (3) s'étendant chacun en parallèle entre un conducteur positif (4) et un conducteur négatif (5) d'un bus continu (7), chaque bras (3) comprenant en série au moins deux cellules de commutation (10), et
- une unité de contrôle (14) configurée pour mettre en œuvre un procédé selon l'une quelconque des revendications précédentes.

## Patentansprüche

1. Verfahren zum Entladen von wenigstens einer elektrischen Energiespeichereinheit, insbesondere eines Kondensators oder einer autonomen Quelle elektrischer Energie, einer elektrischen Schaltung, wobei die elektrische Schaltung ferner ein Schaltsystem umfasst, umfassend eine Vielzahl von Armen, die sich jeweils parallel zwischen einem positiven Leiter und einem negativen Leiter eines DC-Bus erstrecken, wobei jeder Arm wenigstens zwei Schaltzellen in Reihe umfasst,
wobei das Verfahren umfasst:
- einen ersten Schritt, bei dem ein Kurzschluss in einem ersten Arm und einem zweiten Arm eingerichtet wird, um einem Weg zu definieren, der es dem Entladestrom erlaubt, zwischen dem positiven Leiter und dem negativen Leiter des DC-Bus zu fließen, und
**dadurch gekennzeichnet, dass** das Verfahren umfasst
- einen zweiten Schritt, bei dem ein Kurzschluss im zweiten Arm und einem anderen Arm eingerichtet wird, um einen Weg zu definieren, der es dem Entladestrom erlaubt, zwischen dem positiven Leiter und dem negativen Leiter des DC-Bus zu fließen.

2. Verfahren nach Anspruch 1, umfassend:
- einen auf den ersten und zweiten Schritt nachfolgenden Schritt, bei dem ein Kurzschluss im ersten Arm des Schaltsystems (2) eingerichtet wird, so dass der Entladestrom (I_{DC}) bei diesem ersten Schritt nur über den ersten Arm vom positiven Leiter (4) zum negativen Leiter (5) des DC-Bus (7) fließt.

3. Verfahren nach Anspruch 1, umfassend:
- einen auf den ersten und zweiten Schritt nachfolgenden Schritt, bei dem ein Kurzschluss in einem dritten Arm des Schaltsystems (2) eingerichtet wird, so dass der Entladestrom (I_{DC}) bei diesem ersten Schritt nur über den dritten Arm vom positiven Leiter (4) zum negativen Leiter (5) des DC-Bus (7) fließt.

4. Verfahren nach einem der Ansprüche 1 bis 3, wobei die Entladung der elektrischen Energiespeichereinheit durch aufeinanderfolgendes Einrichten mehrerer Kurzschlüsse im Schaltsystem (2) zwischen dem positiven Leiter (4) und dem negativen Leiter (5) des DC-Bus (7) erfolgt und wobei nach und nach bei der Entladung der elektrischen Energiespeichereinheit die Dauer, während der jeder Kurzschluss eingerichtet ist, zunimmt.

5. Verfahren nach einem der vorangehenden Ansprüche, wobei das Schaltsystem (2) einen DC-AC-Spannungswandler bildet.

6. Verfahren nach einem der Ansprüche 1 bis 4, wobei das Schaltsystem (2) wenigstens zwei verschlungene DC-AC-Spannungswandler bildet.

7. Verfahren nach einem der vorangehenden Ansprüche, wobei jede Schaltzelle (10) steuerbar ist und wobei, um einen Kurzschluss in einem Arm (3) zwischen dem positiven Leiter (4) und dem negativen Leiter (5) des DC-Bus (7) zu bilden, die Schaltzellen (10) dieses Arms (3) gesteuert werden.

8. Verfahren nach einem der Ansprüche 1 bis 6, wobei jede Schaltzelle (10) steuerbar ist und wobei vor der Entladung der elektrischen Energiespeichereinheit alle Schaltzellen (10), die direkt mit dem positiven (4) beziehungsweise negativen (5) Leiter des DC-Bus (7) verbunden sind, derart gesteuert werden, dass sie alle denselben Schaltzustand haben und wobei jeder Kurzschluss eingerichtet wird, indem nur die Schaltzellen (10) gesteuert werden, die direkt mit dem negativen (5) beziehungsweisen positiven (4) Leiter des DC-Bus (7) verbunden sind.

9. Verfahren nach einem der vorangehenden Ansprüche, wobei die elektrische Schaltung (1) ebenfalls eine elektrische Statorwicklung (22) einer drehenden elektrischen Maschine umfasst, die imstande ist, mit dem Mittelpunkt (13) jedes Arms (3) des Schaltsystems (2) verbunden zu sein.

10. Verfahren nach Anspruch 9, wobei ein Schalter (24) zwischen jedem Mittelpunkt (13) des Schaltsystems (2) und der elektrischen Statorwicklung (22) zwischengestellt ist und wobei diese Schalter (24) bei der Entladung der elektrischen Energiespeichereinheit das Schaltsystem (2) von der elektrischen Statorwicklung (22) entkoppeln.

11. Verfahren nach einem der vorangehenden Ansprüche, wobei ein Kondensator (20) parallel zu den Armen (3) des Schaltsystems (2) angebracht ist und wobei der Kondensator (20) entladen wird.

12. Verfahren nach einem der vorangehenden Ansprüche, wobei die elektrische Schaltung (1) ferner eine autonome Quelle elektrischer Energie (30) umfasst, zu der ein Kondensator (40) parallel angebracht ist, und einen zwischen der autonomen Quelle elektrischer Energie (30) und dem Schaltsystem (2) zwischengestellten DC-DC-Spannungswandler (32), wobei bei dem Verfahren der Kondensator (40) entladen wird.

13. Spannungswandler, insbesondere für einen Klimatisierungskompressor eines Fahrzeugs, umfassend:
- ein Schaltsystem (2), umfassend eine Vielzahl von Armen (3), die sich jeweils parallel zwischen einem positiven Leiter (4) und einem negativen Leiter (5) eines DC-Bus (7) erstrecken, wobei jeder Arm (3) wenigstens zwei Schaltzellen (10) in Reihe umfasst, und
- eine Steuereinheit (14), die konfiguriert ist, um ein Verfahren nach einem der vorangehenden Ansprüche durchzuführen.

## Claims

1. A method for discharging at least one electrical energy storage unit, in particular a capacitor or a standalone source of electrical energy, of an electrical circuit, the electrical circuit furthermore comprising a switching system comprising a plurality of legs each extending in parallel between a positive conductor and a negative conductor of a DC bus, each leg comprising at least two switching cells in series, the method comprising:
- a first step during which a short circuit is produced in a first leg and a second leg so as to define a path allowing the discharge current to flow between the positive conductor and the negative conductor of the DC bus, and wherein the method comprises
- a second step during which a short circuit is produced in the second leg and another leg so as to define a path allowing the discharge current to flow between the positive conductor and the negative conductor of the DC bus.

2. The method as claimed in claim 1, comprising:
- a step prior to the first and second steps in which a short circuit is produced in the first leg of the switching system (2) so that during this first step, the discharge current (I_{DC}) flows from the positive conductor (4) to the negative conductor (5) of the DC bus (7) only through said first leg.

3. The method as claimed in claim 1 or 2, comprising:
- a step prior to the first and second steps in which a short circuit is produced in a third leg of the switching system (2) so that during this first step, the discharge current (I_{DC}) flows from the positive conductor (4) to the negative conductor (5) of the DC bus (7) only through said third leg.

4. The method as claimed in any one of claims 1 to 3, in which the discharging of the electrical energy storage unit is carried out by successively producing multiple short circuits in the switching system (2) between the positive conductor (4) and the negative conductor (5) of the DC bus (7) and in which, as the electrical energy storage unit is being discharged, the duration for which each short circuit is produced increases.

5. The method as claimed in any one of the preceding claims, in which the switching system (2) forms a DC-AC voltage converter.

6. The method as claimed in any one of claims 1 to 4, in which the switching system (2) forms at least two interleaved DC-DC voltage converters.

7. The method as claimed in any one of the preceding claims, in which each switching cell (10) is controllable and in which, in order to form a short circuit in a leg (3) between the positive conductor (4) and the negative conductor (5) of the DC bus (7), the switching cells (10) of this leg (3) are controlled.

8. The method as claimed in any one of claims 1 to 6, in which each switching cell (10) is controllable and in which, prior to the discharging of the electrical energy storage unit, all of the switching cells (10) directly connected to the positive (4) or negative (5) conductor of the DC bus (7) are controlled in such a way that they all have the same switching state and in which each short circuit is produced by controlling only the switching cells (10) directly connected to the negative (5) or positive (4) conductor of the DC bus (7) .

9. The method as claimed in any one of the preceding claims, in which the electrical circuit (1) also comprises a stator electrical winding (22) of a rotating electric motor capable of being connected to the midpoint (13) of each leg (3) of the switching system (2).

10. The method as claimed in claim 9, in which a switch (24) is interposed between each midpoint (13) of the switching system (2) and the stator electrical winding (22) and in which these switches (24) disconnect the switching system (2) from the stator electrical winding (22) during the discharging of the electrical energy storage unit.

11. The method as claimed in any one of the preceding claims, in which a capacitor (20) is connected in parallel with the legs (3) of the switching system (2) and in which said capacitor (20) is discharged.

12. The method as claimed in any one of the preceding claims, in which the electrical circuit (1) furthermore comprises a standalone source of electrical energy (30) in parallel with which a capacitor (40) is connected, and a DC-DC voltage converter (32) interposed between said standalone source of electrical energy (30) and the switching system (2), in which method said capacitor (40) is discharged.

13. A voltage converter, in particular for an air conditioning compressor of a vehicle, comprising:
- a switching system (2) comprising a plurality of legs (3) each extending in parallel between a positive conductor (4) and a negative conductor (5) of a DC bus (7), each leg (3) comprising at least two switching cells (10) in series, and
- a control unit (14) configured so as to implement a method as claimed in any one of the preceding claims.
